# EUROPEAN PATENT SPECIFICATION

(11) **EP 4 074 998 B1**
(45) Date of publication and mention of the grant of the patent: **08.11.2023**
(21) Application number: 22167867.5
(22) Date of filing: 12.04.2022
(51) Int. Cl.: E05D 15/06

(54) **ROLLING GUIDE DEVICE AND OPENING AND CLOSING MECHANISM**
ROLLFÜHRUNGSVORRICHTUNG UND ÖFFNUNGS- UND SCHLIESSMECHANISMUS
DISPOSITIF DE GUIDAGE À ROULEMENT ET MÉCANISME D'OUVERTURE ET DE FERMETURE

(30) Priority: 13.04.2021 JP 2021067594
(43) Date of publication of application: 19.10.2022
(73) Proprietor: THK CO., LTD., Minato-ku Tokyo 108-8506 (JP); Nabtesco Corporation, Tokyo 102-0093 (JP)
(72) Inventor: Toba, Yuki, Tokyo, 108-8506 (JP); Sakaki, Genta, Tokyo, 102-0093 (JP)
(74) Representative: Grünecker Patent- und Rechtsanwälte PartG mbB

(56) References cited:
- EP-A1- 0 450 649
- WO-A1-2006/059657
- JP-A- 2004 316 177

## Description

### TECHNICAL FIELD

The present invention relates to a rolling guide device and an opening and closing mechanism using the rolling guide device.

### BACKGROUND ART

Conventionally, a rolling guide device including a track rail extending in a longitudinal direction and having a substantial C-shape in cross-section, a slider installed in such a manner as to be capable of reciprocating movement along the longitudinal direction of the track rail, and a plurality of rolling elements rollably disposed in an inner space of the substantial C-shape of the track rail between the track rail and the slider to guide reciprocating movement of the slider relative to the track rail has been publicly known.

As a specific example of this type of rolling guide device, there is a linear bearing disclosed in Japanese Patent No. 3292459. This linear bearing has a configuration in which two, right and left, linear rails each having a C-shape in cross-section are provided in parallel in such a manner as to face each other in a right-left direction, two inner tracks are formed in each of the rails in such a manner as to face each other in an up-down direction, a slider including three or more rollers that are in contact with upper and lower inner tracks alternately is provided, an outline of an outer circumferential surface of each roller has a shape of a circular arc with a radius r in cross-section, one of the upper and lower inner tracks has a V-shape in cross-section and the other inner track has a shape of a circular arc with a radius R in cross-section and the radius R is longer than the radius r of the outline of the roller. Because of such configuration, the linear bearing disclosed in Japanese Patent No. 3292459 is described as enabling the slider to move smoothly even if the rails are deformed by expansion due to heat or a load, resulting in loss of the right-left parallelism. Further relevant prior art is described in JP 2004 316177 A, EP 0 450 649 A1, and WO 2006/059657 A1.

### SUMMARY OF THE INVENTION

### PROBLEMS TO BE SOLVED BY THE INVENTION

However, conventional rolling guide devices represented by the linear bearing disclosed in the aforementioned Japanese Patent No. 3292459 may fail to perform a proper and stable guiding operation if a roll moment Mc is applied to a moving member such as a slider. For example, where an opening and closing mechanism in which a track member such as a track rail is installed on a door frame and a door body such as a hanging door is installed on a moving member such as a slider to perform an operation of opening and closing the door body from/to the door frame is assumed, the hanging door exerts unbalanced weight on the moving member. If such unbalanced weight is applied to the moving member, the conventional rolling guide device fails to perform a proper and stable guiding operation because of poor rigidity against a roll moment Mc.

The present invention has been made in view of the above case in the conventional techniques, and an object of the present invention is to provide a rolling guide device capable of performing a proper and stable guiding operation even if unbalanced weight is applied to a moving member, through enhancement in rigidity against a roll moment Mc.

### MEANS FOR SOLVING THE PROBLEMS

In particular it is provided a rolling guide device having the features defined in claim 1. Further it is provided an opening and closing mechanism having the features defined in claim 5. Further preferred embodiments are defined in the dependent claims. A rolling guide device according to the present invention is a rolling guide device including: a track member that is a long member extending in a longitudinal direction, the track member including a mounting surface portion that serves as a base for mounting to an external member and a pair of wall portions provided in such a manner as to stand from respective opposite end portions of the mounting surface portion toward one side; a moving member installed in such a manner as to be capable of reciprocating movement along the longitudinal direction of the track member; and a plurality of first rolling elements rollably disposed inside a space between the track member and the moving member, the space being surrounded by the mounting surface portion and the pair of wall portions included in the track member, to guide reciprocating movement of the moving member relative to the track member, wherein a rolling element rolling surface that is in contact with a rolling element outer circumferential surface of a first rolling element from among the first rolling elements is formed at each of respective wall surfaces of the pair of wall portions, the wall surfaces facing each other, the rolling element rolling surfaces formed at the pair of wall portions, respectively, are each formed as a circular arc groove including a single circular arc, to allow each of the first rolling elements and the corresponding one of the rolling element rolling surfaces to be in contact with each other at one point, and the moving member includes a second rolling element that rolls in contact with an outer end portion of one wall portion of the pair of wall portions included in the track member.

Also, the present invention includes an opening and closing mechanism including the above rolling guide device, the track member of the rolling guide device being installed on a door frame, a door body being installed on the moving member, to allow the opening and closing mechanism to perform an operation of opening and closing the door body relative to the door frame.

### EFFECTS OF THE INVENTION

The present invention enables provision of a rolling guide device capable of performing a proper and stable guiding operation even if unbalanced weight is applied to a moving member, through enhancement in rigidity against a roll moment Mc.

### BRIEF DESCRIPTION OF THE DRAWINGS

Fig. 1 is a transparent view of a rolling guide device according to a first embodiment from the front side.
Fig. 2 is a transparent view of the rolling guide device according to the first embodiment from the left side.
Fig. 3 includes schematic diagrams for describing a manner of a first wheel rolling on a first wheel upper rolling surface and a first wheel lower rolling surface in the first embodiment.
Fig. 4 is a diagram illustrating a usage example in a case where a hanging door is mounted to the rolling guide device according to the first embodiment.
Fig. 5 is a diagram illustrating an alteration of the rolling guide device according to the first embodiment and a usage example in a case where a door body to be used in a railway car is mounted to the rolling guide device according to the alteration.
Fig. 6 is a diagram illustrating an example configuration of a railway car with the rolling guide device illustrated in Fig. 5 installed therein.
Fig. 7 is a left side view of a rolling guide device according to a second embodiment.
Fig. 8 includes outer appearance perspective views of the rolling guide device according to the second embodiment from the diagonally upper left side.
Fig. 9 is a transparent perspective view of the rolling guide device according to the second embodiment with a moving slider removed.

### MODE FOR CARRYING OUT THE INVENTION

Preferable embodiments for carrying out the present invention will be described below with reference to the drawings. Note that the following embodiments are not intended to limit the invention which is defined by the appended claims.

### [First Embodiment]

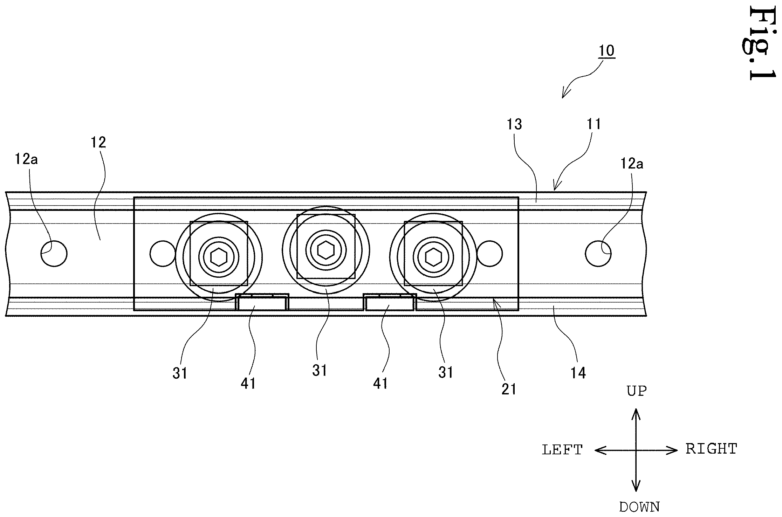

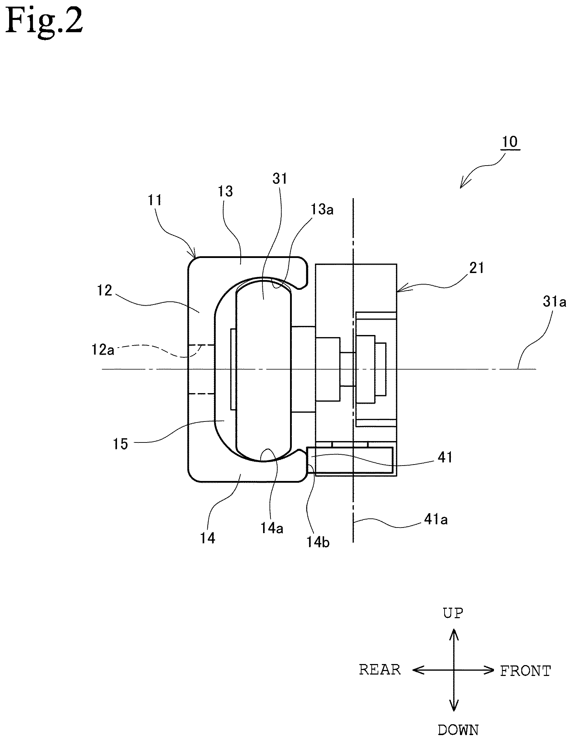

First, a basic configuration of a rolling guide device 10 according to a first embodiment will be described with reference to Figs. 1 and 2. Here, Fig. 1 is a transparent view of a rolling guide device according to a first embodiment from the front side and Fig. 2 is a transparent view of the rolling guide device according to the first embodiment from the left side. Note that in the present description, for convenience of description, directions in the rolling guide device 10 are defined as illustrated in Figs. 1 and 2. However, these directions are not those indicating directions when the rolling guide device 10 according to the first embodiment is in use, and the rolling guide device 10 according to the first embodiment can be used in any position. In other words, the directions "front", "rear", "up", "down", "right" and "left" indicated in Figs. 1 and 2 are definitely those determined for convenience of description.

As illustrated in Figs. 1 and 2, the rolling guide device 10 according to the first embodiment includes a track rail 11, which serves as a track member, a moving slider 21, which serves as a moving member installed in such a manner as to be capable of reciprocating movement along a longitudinal direction of the track rail 11 (that is, the right-left direction in Fig. 1), first wheels 31, which each serve as a first rolling element rollably disposed between the track rail 11 and the moving slider 21, and second rollers 41, which each serve as a second rolling element rollably disposed on the lower surface side of the moving slider 21.

The track rail 11 is a long member extending in the longitudinal direction and having a substantial C-shape in cross-section. As illustrated in Fig. 2, the track rail 11 of the first embodiment includes a mounting surface portion 12 extending in the up-down direction, an upper wall portion 13, which serves as a wall portion according to the present invention, the upper wall portion 13 extending frontward from an upper end of the mounting surface portion 12, and a lower wall portion 14, which serves as a wall portion according to the present invention, the lower wall portion 14 extending frontward from a lower end of the mounting surface portion 12, in side view.

On the lower surface side of the upper wall portion 13, a first wheel upper rolling surface 13a, which serves as a rolling element rolling surface according to the present invention, the first wheel upper rolling surface 13a being in contact with a wheel outer circumferential surface of a relevant first wheel 31, is formed. Likewise, on the upper surface side of the lower wall portion 14, a first wheel lower rolling surface 14a, which serves as a rolling element rolling surface according to the present invention, the first wheel lower rolling surface 14a being in contact with a wheel outer circumferential surface of each of relevant first wheels 31, is formed. The first wheel upper rolling surface 13a and the first wheel lower rolling surface 14a are disposed in such a manner as to face each other in side view. Then, the first wheels 31 are rollably disposed in an inner space 15 surrounded by the mounting surface portion 12, the upper wall portion 13 and the lower wall portion 14 (inside a space according to the present invention).

The track rail 11 of the first embodiment is formed in the aforementioned contour shape by plastically deforming a metal material via a drawing process and forming a part of the track rail 11 that the later-described second rollers 41 come into contact with, that is, a part of a lower open end portion 14b of the substantial C-shape of the track rail 11 (outer end portion according to the present invention), as a flat surface subjected to a grinding process. However, a method for forming the track rail 11 is not limited to a combination of a drawing process and a grinding process. For example, the outer appearance shape may be formed by performing, e.g., a grinding process or a cutting process of a metal material or the contour shape may be formed by plastically deforming a metal material via a drawing process and subsequently performing a thermal treatment process to control a surface hardness and internal quality and then performing, e.g., a grinding process. In other words, the contour shape of the track rail 11, which is a track member of the present invention, can be formed using any process method.

Also, the track rail 11 of the first embodiment is a member that serves as a base for mounting of the rolling guide device 10. Therefore, in the first embodiment, mounting holes 12a such as bolt holes are formed in the mounting surface portion 12 included in the track rail 11, enabling the track rail 11 to be fixedly installed on a mounting base surface of, e.g., a base or a door frame using the mounting holes 12a.

As illustrated in Figs. 1 and 2, the moving slider 21 is a block-like member having a substantially rectangular shape and is disposed in such a manner as to be capable of reciprocating movement along the longitudinal direction of the track rail 11. In the moving slider 21 of the first embodiment, three first wheels 31 are rollably disposed on the rear surface side and two second rollers 41 are rollably disposed on the lower surface side. Also, a movable member to be guided and moved by the rolling guide device 10 can be installed on the front surface side of the moving slider 21.

Each of the first wheels 31 is a member rollably disposed in the inner space 15 of the substantial C-shape of the track rail 11, between the track rail 11 and the moving slider 21, to guide reciprocating movement of the moving slider 21 relative to the track rail 11.

More specifically, as the first wheels 31 of the first embodiment, three first wheels 31 are rollably disposed on the rear surface side of the moving slider 21. Then, as is clear with reference to the comparison between Figs. 1 and 2, one first wheel 31 located at a center from among the three first wheels 31 is disposed in such a manner as to be in contact with the first wheel upper rolling surface 13a and be not in contact with, but be spaced from, the first wheel lower rolling surface 14a. On the other hand, two first wheels 31 located at the right and the left from among the three first wheels 31 are disposed in such a manner as to be in contact with the first wheel lower rolling surface 14a and be not in contact with, but be spaced from, the first wheel upper rolling surface 13a. As a result of the three first wheels 31 are disposed in such a manner as to be staggered in the up-down direction in front view in this way, for example, when the moving slider 21 moves to the right side of the sheet relative to the track rail 11 in Fig. 1, the one first wheel 31 located at the center rotates counterclockwise in the sheet of Fig. 1 and the two first wheels 31 located at the right and the left rotate clockwise in the sheet of Fig. 1. Also, conversely, when the moving slider 21 moves to the left side of the sheet relative to the track rail 11 in Fig. 1, the one first wheel 31 located at the center rotates clockwise in the sheet of Fig. 1 and the two first wheels 31 located at the right and the left rotate counterclockwise in the sheet of Fig. 1. In this way, the three first wheels 31 being disposed in such a manner as to be staggered in the up-down direction in front view enables the moving slider 21 that makes relative linear movement along the longitudinal direction of the track rail 11 to make favorable linear reciprocating movement while properly receiving a moment load.

Note that in the first embodiment illustrated in Figs. 1 and 2, the one first wheel 31 located at the center is disposed in contact with the first wheel upper rolling surface 13a and the two first wheels 31 located at the right and the left are disposed in contact with the first wheel lower rolling surface 14a. However, the scope of the present invention is not limited to this example, and for example, a configuration in which the one first wheel 31 located at the center is disposed in contact with the first wheel lower rolling surface 14a and the two first wheels 31 located at the right and the left are disposed in contact with the first wheel upper rolling surface 13a, which is a disposition opposite to the first embodiment, may be employed.

Also, in the present invention, it is possible to employ an example configuration in which four or more first wheels 31 are disposed on the rear surface side of the moving slider 21; however, in the case of this example configuration, it is preferable that adjacent first wheels 31 be disposed in contact with the first wheel upper rolling surface 13a and the first wheel lower rolling surface 14a alternately.

Furthermore, "wheel" in the present invention refers to a wheel member rotatably mounted on a rotation shaft, and may be one including a rolling contact surface of contact with a counterpart member, the rolling contact surface including any of a horizontal surface, a projecting curve surface and a recessed curve surface. In the present embodiment, a case where the rolling contact surface of the first wheel 31 is formed as a projecting curve surface is illustrated as an example (see Fig. 2).

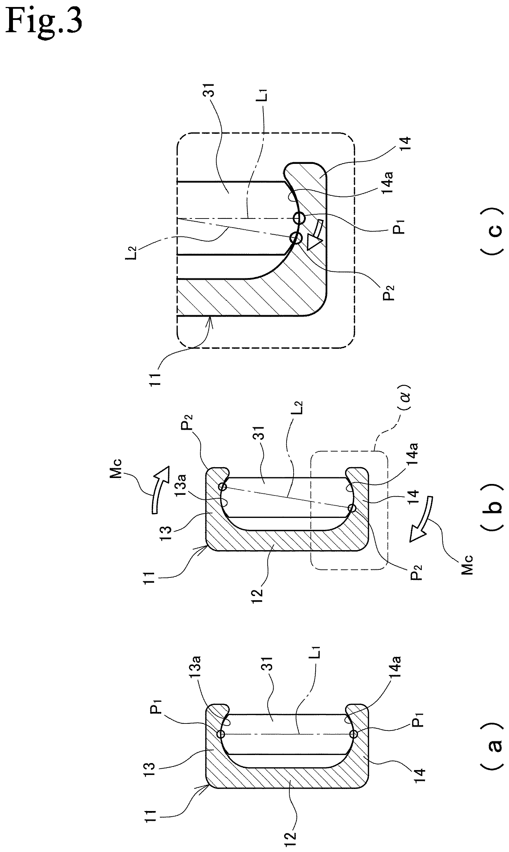

Here, a relationship between the first wheels 31 and the first wheel upper rolling surface 13a and the first wheel lower rolling surface 14a will be described with Fig. 3 added to the reference drawings. Fig. 3 includes schematic diagrams for describing a manner of a first wheel rolling on a first wheel upper rolling surface and a first wheel lower rolling surface in the first embodiment. Fig. 3(a) illustrates a state in which no roll moment Mc is applied to the moving slider 21, Fig. 3(b) illustrates a state in which a roll moment Mc is applied to the moving slider 21 and Fig. 3(c) is an enlarged view of a dashed line region indicated by sign α in Fig. 3(b).

In the first embodiment, the first wheel upper rolling surface 13a and the first wheel lower rolling surface 14a each have a shape of a circular arc groove formed of a single circular arc in cross-section. In other words, a radius of curvature of each of the first wheel upper rolling surface 13a and the first wheel lower rolling surface 14a is slightly larger than a radius of curvature of the rolling contact surface of each first wheel 31. Therefore, each first wheel 31 according to the first embodiment comes into contact with the first wheel upper rolling surface 13a and the first wheel lower rolling surface 14a at one point.

Then, as illustrated in Fig. 3(a), where no roll moment Mc is applied to the moving slider 21, a line L₁ indicating a roll direction orthogonal to a rotation center line of the first wheel 31 is a vertical line extending in the up-down direction, and respective contact points P₁ of contact between the first wheels 31 and the first wheel upper rolling surface 13a and the first wheel lower rolling surface 14a are located at respective centers of groove bottoms of the circular arc grooves forming the first wheel upper rolling surface 13a and the first wheel lower rolling surface 14a.

Upon application of a roll moment Mc to the moving slider 21 in the state illustrated in Fig. 3(a), as illustrated in Fig. 3(b), the first wheels 31 are inclined in the direction in which the moment Mc is applied (clockwise direction in the sheet of Fig. 3(b)). In other words, the line L₁ indicating the roll direction orthogonal to the rotation center line of the first wheel 31 is inclined to the position of a line L₂. In this case, since each of the first wheel upper rolling surface 13a and the first wheel lower rolling surface 14a has a shape of a circular arc groove formed of a single circular arc in cross-section, the contact points move from the contact points P₁ to contact points P₂ according to the clockwise inclination of the first wheels 31. In other words, in the rolling guide device 10 according to the first embodiment, even if a roll moment Mc is applied to the moving slider 21, the contact points shift according to the moment Mc and each of the first wheels 31 and the first wheel upper rolling surface 13a and the first wheel lower rolling surface 14a are consistently in contact with each other at one point, enabling a favorable rolling motion with a smaller differential slippage amount to be consistently provided.

Referring to Fig. 2, in the rolling guide device 10 according to the first embodiment, a rotation center line 31a of each of the first wheels 31 described above is a horizontal line along the front-rear direction. On the other hand, a rotation center line 41a of each of the second rollers 41 disposed on the lower surface side of the moving slider 21 is a vertical line extending along the up-down direction. In other words, each second roller 41 according to the first embodiment has a rotation center axis 41a in a direction substantially orthogonal to the rotation center axes 31a of the first wheels 31.

Furthermore, each second roller 41 is configured to roll in contact with the lower open end portion 14b of the substantial C-shape of the track rail 11. As described above, in the first embodiment, the first wheel upper rolling surface 13a and the first wheel lower rolling surface 14a that are in contact with the first wheels 31 are each configured as a circular arc groove, and thus, application of an external load to the moving slider 21 causes the contact points P₁, P₂ to consistently shift. However, in the first embodiment, the second rollers 41 are each configured to roll in contact with the lower open end portion 14b of the substantial C-shape of the track rail 11, and thus properly compensate for the shifting of the contact points P₁, P₂, enabling the first wheels 31 and the second rollers 41 to cooperatively receive a roll moment Mc. In other words, in the first embodiment, a combination of two configurations, the configuration of the first wheels 31 and the first wheel upper rolling surface 13a and the first wheel lower rolling surface 14a and the configuration of the second rollers 41 and the lower open end portion 14b of the substantial C-shape of the track rail 11, enables enhancement in rigidity against a roll moment Mc, and thus enables provision of the rolling guide device 10 capable of performing a proper and stable guiding operation even if unbalanced weight is applied to the moving slider 21.

Also, in the first embodiment, the first wheel upper rolling surface 13a and the first wheel lower rolling surface 14a that are in contact with the first wheels 31 are each configured as a circular arc groove, and thus, a merit of mounting error absorption shows up as a displacement depending on the counterpart of the mounting. Therefore, in particular, in the case of the first embodiment in which circular arc grooves are employed for the first wheel upper rolling surface 13a and the first wheel lower rolling surface 14a that are in contact with the first wheels 31, it is more preferable that the second rollers 41 capable of favorably receiving a roll moment Mc be provided.

In the first embodiment, it is assumed that the open end portion 14b of the track rail 11, the open end portion 14b being in contact with the second rollers 41, is formed as a flat surface by subjecting a metal material to a drawing process and a subsequent grinding process. However, it is also possible that the open end portion 14b on which the second rollers 41 roll is left in the state of the open end portion 14b subjected to the drawing process without being subjected to the grinding process.

Also, as illustrated in Figs. 1 and 2, in the first embodiment, the second rollers 41 are disposed in such a manner as to not project from an outer periphery of the moving slider 21, and thus, the rolling guide device 10 according to the first embodiment has a very compact configuration as a whole. Such configuration produces an effect of minimization of installation space, and thus the rolling guide device 10 according to the first embodiment has an advantage of a large scope of applicability.

In the rolling guide device 10 according to the first embodiment, it is preferable that rotation shafts of first wheels 31 and/or second rollers 41 be made to be eccentric shafts to enable adjustment in position of the first wheels 31 and/or the second rollers 41 through rotation of the eccentric shafts. For example, as illustrated in Fig. 1, in the first embodiment, three first wheels 31 are disposed side by side in the right-left direction; however, rotation shafts of the two first wheels 31 disposed at the right and the left are made to be fixed shafts and a rotation shaft of the one first wheel 31 disposed at the center is made to be an eccentric shaft to enable making, e.g., preload adjustment of the three first wheels 31 for the track rail 11 by moving the position of the first wheel 31 disposed at the center upward. Also, it is possible to perform, e.g., preload adjustment of the second rollers 41 for the track rail 11 by making the rotation shafts of the second rollers 41 as eccentric shafts and performing adjustment in position of the second rollers 41 in the front-rear direction by rotating the eccentric shafts to arbitrary positions.

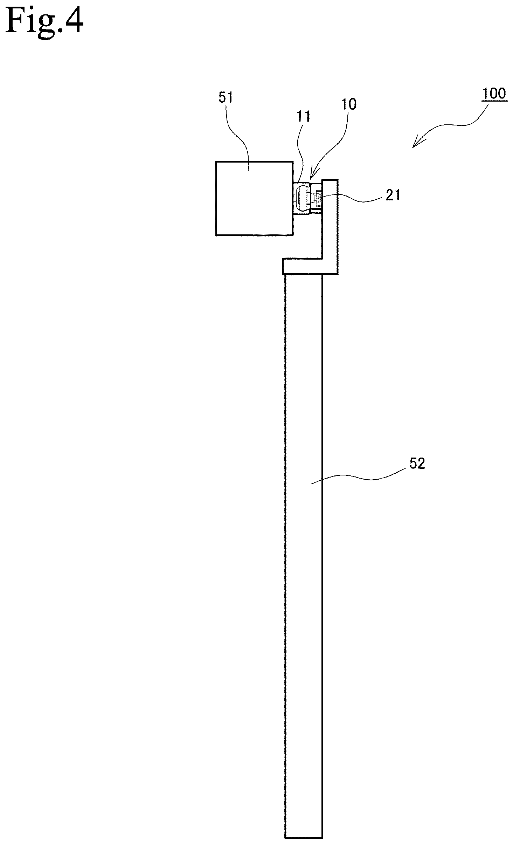

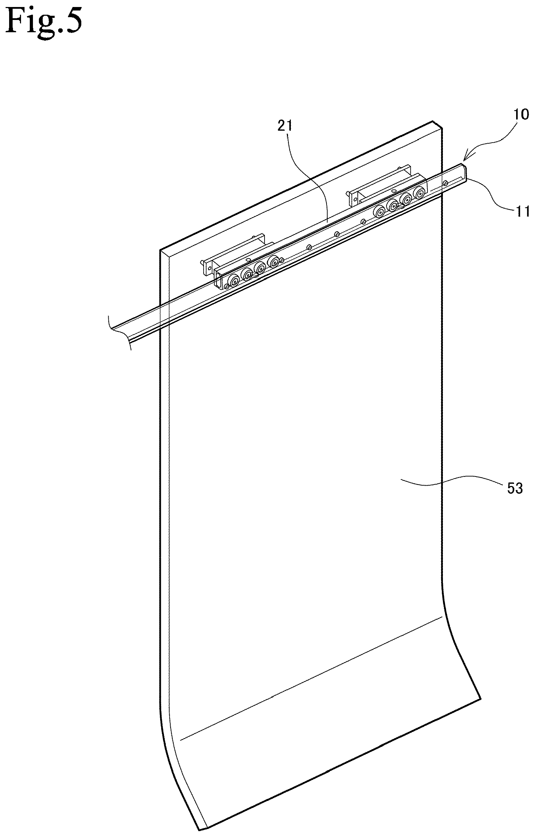

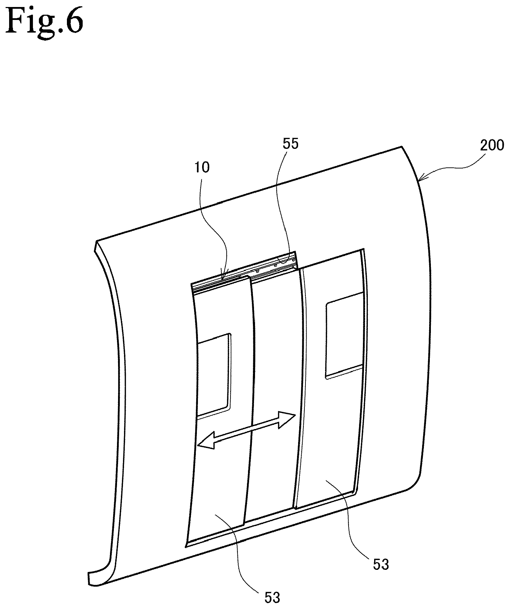

The rolling guide device 10 according to the first embodiment has been described above. This rolling guide device 10 is suitable for use in, for example, an opening and closing mechanism of a hanging door to be used in a house or an opening and closing mechanism of a door body to be used in a railway car. Therefore, next, an example of industrial application of the rolling guide device 10 according to the first embodiment will be described with reference to Figs. 4 to 6. Here, Fig. 4 is a diagram illustrating a usage example in a case where a hanging door is mounted to the rolling guide device according to the first embodiment. Also, Fig. 5 is a diagram illustrating an alteration of the rolling guide device according to the first embodiment and a usage example in a case where a door body to be used for a railway car is mounted to the rolling guide device according to the alteration. Furthermore, Fig. 6 is a diagram illustrating an example configuration of a railway car with the rolling guide device illustrated in Fig. 5 installed therein.

As illustrated in Fig. 4, the rolling guide device 10 according to the first embodiment enables configuring an opening and closing mechanism 100 for a hanging door 52 to be used in a house by fixedly installing the track rail 11 on a slide door frame 51 and installing the hanging door 52 on the moving slider 21. In the case of the hanging door 52, unbalanced weight is applied to the moving slider 21; however, the rolling guide device 10 according to the first embodiment enables the first wheels 31 and the second rollers 41 to cooperatively receive a roll moment Mc and is thus capable of properly and stably guiding the hanging door 52.

Also, as illustrated in Fig. 5, for the rolling guide device 10 according to the first embodiment, it is possible to increase the number of first wheels 31 installed, install a large moving slider 21 on a single track rail 11 or install a plurality of moving sliders 21 on a single track rail 11. For example, in the case of the alteration illustrated in Fig. 5, eight first wheels 31 are installed and a long moving slider 21 is installed on a single track rail 11. Then, four first wheels 31 on respective positions on each of the right and left sides of the long moving slider 21, that is, a total of eight first wheels 31 are disposed. Furthermore, a single door body 53 for a railway car is installed using the long moving slider 21.

The rolling guide device 10 of the alteration illustrated in Fig. 5 is usable as an opening and closing mechanism 200 for opening and closing an entrance of a railway car such as one illustrated in Fig. 6. In this opening and closing mechanism 200, the track rail 11 of the rolling guide device 10 according to the alteration is installed on a door frame 55 (corresponding to a body of a railway car) and a door body 53 is installed on the moving slider 21, enabling an operation of opening and closing the door body 53 from/to the door frame 55 (corresponding to a body of a railway car). In particular, use of the rolling guide device 10 for a railway car enables provision of an effect of providing a wide range in size of the door body 53 because the rolling guide device 10 has a very compact configuration such that the second rollers 41 do not project from the outer periphery of the moving slider 21.

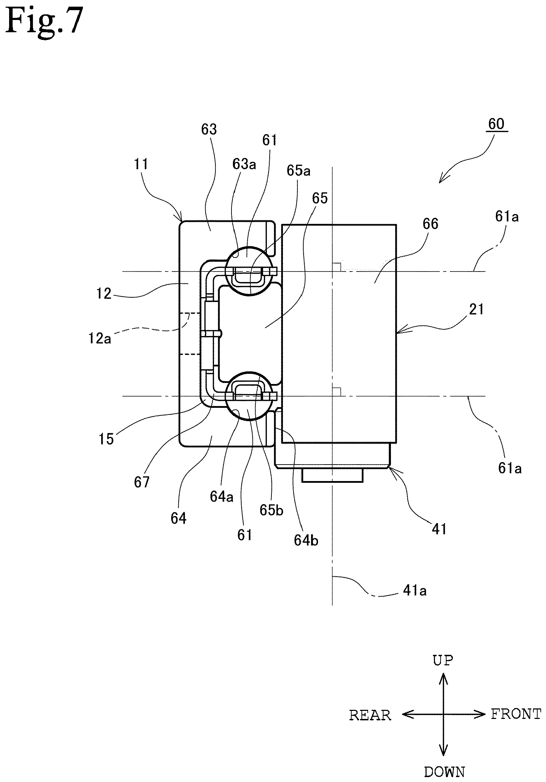

The configuration of the rolling guide device 10 according to the first embodiment and an alternation thereof have been described above. Next, another embodiment of the rolling guide device according to the present invention will be described with reference to Figs. 7 to 9.

### [Second Embodiment]

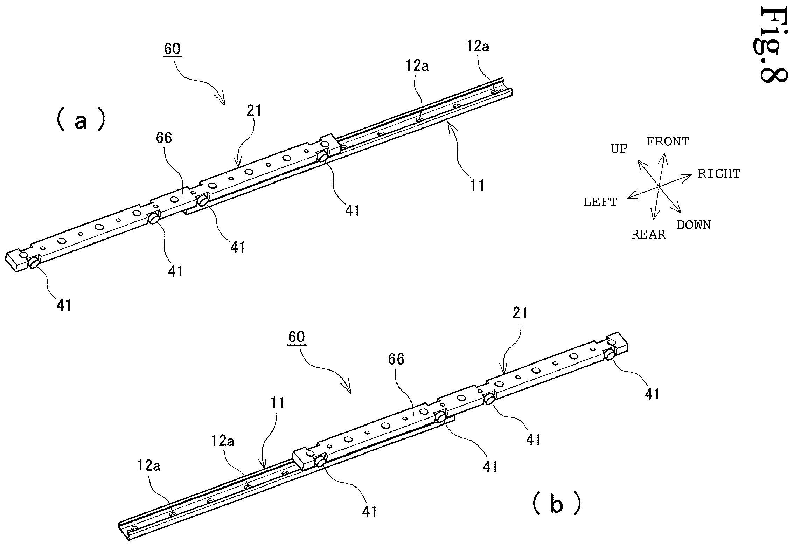

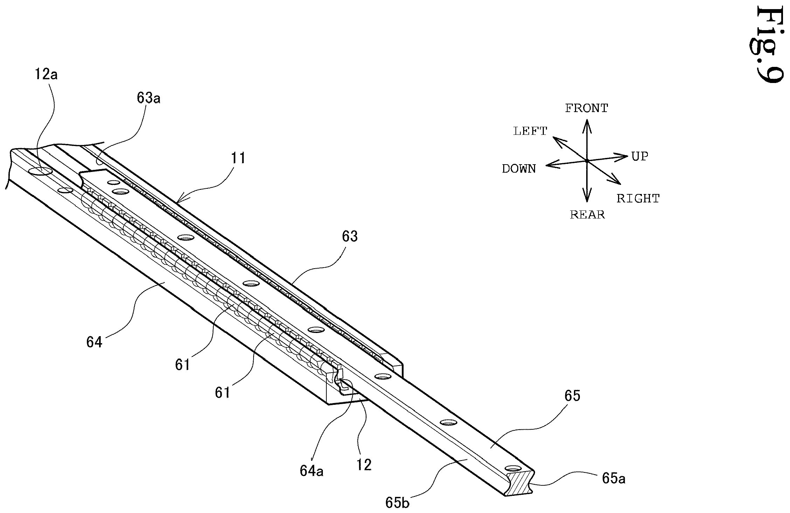

Fig. 7 is a left side view of a rolling guide device according to a second embodiment from the left side. Also, Fig. 8 includes outer appearance perspective views of the rolling guide device according to the second embodiment from the diagonally upper left side. Fig. 8(a) illustrates a state in which a moving slider has been moved to the left side relative to a track rail and Fig. 8(b) illustrates a state in which the moving slider has been moved to the right side relative to the track rail. Furthermore, Fig. 9 is a transparent perspective view of the rolling guide device according to the second embodiment with the moving slider removed. In Figs. 7 to 9, members that are the same as or similar to those of the first embodiment described with reference to Figs. 1 to 3 are provided with reference numerals that are the same as those of the first embodiment and description of such members is omitted.

As illustrated in Fig. 7, a rolling guide device 60 according to a second embodiment includes a track rail 11, which serves as a track member, a moving slider 21, which serves as a moving member installed in such a manner as to be capable of reciprocating movement along a longitudinal direction of the track rail 11 (that is, a direction perpendicular to the sheet of Fig. 7), a multitude of first balls 61, which serve as first rolling elements rollably disposed between the track rail 11 and the moving slider 21, and second rollers 41, which each serve as a second rolling element rollably disposed on the lower surface side of the moving slider 21.

The track rail 11 is a long member extending in the longitudinal direction and having a substantial turned U-shape in cross-section. As illustrated in Fig. 7, the track rail 11 of the second embodiment includes a mounting surface portion 12 extending in the up-down direction, an upper wall portion 63, which serves as a wall portion according to the present invention, the upper wall portion 63 extending frontward from an upper end of the mounting surface portion 12, and a lower wall portion 64, which serves as a wall portion according to the present invention, the lower wall portion 64 extending frontward from a lower end of the mounting surface portion 12, in side view.

On the lower surface side of the upper wall portion 63, a first ball upper rolling surface 63a, which serves as a rolling element rolling surface according to the present invention, the first ball upper rolling surface 63a being in contact with ball outer circumferential surfaces of first balls 61, is formed. Likewise, on the upper surface side of the lower wall portion 64, a first ball lower rolling surface 64a, which serves as a rolling element rolling surface according to the present invention, the first ball lower rolling surface 64a being in contact with ball outer circumferential surfaces of first balls 61, is formed. The first ball upper rolling surface 63a and the first ball lower rolling surface 64a are disposed in such a manner as to face each other in side view.

Also, the track rail 11 of the second embodiment is a member that serves as a base for mounting of the rolling guide device 60. Therefore, in the second embodiment, mounting holes 12a such as bolt holes are formed in the mounting surface portion 12 included in the track rail 11, enabling the track rail 11 to be fixedly installed on a mounting base surface of, e.g., a base or a door frame using the mounting holes 12a.

Furthermore, the track rail 11 of the second embodiment is formed by plastically deforming a metal material via a drawing process and forming a part of the track rail 11 that the later-described second rollers 41 come into contact with, that is, a part of a lower open end portion 64b of the substantial turned U-shape of the track rail 11 (outer end portion according to the present invention) as a flat surface subjected to a grinding process. However, it is also possible that the open end portion 64b on which the second rollers 41 roll is left in the state of the open end portion 64b subjected to the drawing process without being subjected to the grinding process.

As illustrated in Fig. 7, the moving slider 21 according to the second embodiment is configured by a combination of two members that are a slider block 65 and a mounting block 66.

As illustrated in Figs. 7 and 9, the slider block 65 is a long member disposed in the longitudinal direction of the track rail 11, and ball rolling grooves 65a, 65b that face the first ball upper rolling surface 63a and the first ball lower rolling surface 64a, respectively, are formed on upper and lower surface of the slider block 65, respectively. Then, the multitude of first balls 61 are rollably disposed in two load ball rolling channels extending in the right-left direction, which are a load ball rolling channel configured by the first ball upper rolling surface 63a and the ball rolling groove 65a and a load ball rolling channel configured by the first ball lower rolling surface 64a and the ball rolling groove 65b, enabling relative reciprocating movement of the slider block 65 (moving slider 21) along the longitudinal direction of the track rail 11.

As illustrated in Figs. 7 and 8, in the mounting block 66 four second rollers 41 are rollably disposed on the lower surface side. Also, a movable member to be guided and moved by the rolling guide device 60 can be installed on the front surface side of the mounting block 66.

According to the above, the slider block 65 is disposed in an inner space 15 surrounded by the mounting surface portion 12, the upper wall portion 63 and the lower wall portion 64, and furthermore, the multitude of first balls 61 are rollably disposed inside the load ball rolling channel configured by the first ball upper rolling surface 63a and the ball rolling groove 65a and the load ball rolling channel configured by the first ball lower rolling surface 64a and the ball rolling groove 65b. Therefore, reciprocating movement of the moving slider 21 relative to the track rail 11 is enabled by the multitude of first balls 61 rolling.

As illustrated in Fig. 7, the multitude of first balls 61 are aligned by a retainer 67 formed of resin or metal, and can roll in the aligned state in the two load ball rolling channels.

Referring to Fig. 7, in the rolling guide device 60 according to the second embodiment, each of rotation center lines 61a of the above-described first balls 61 is a horizontal line along the front-rear direction. On the other hand, each of rotation center lines 41a of the second rollers 41 disposed on the lower surface side of the moving slider 21 is a vertical line along the up-down direction. In other words, each second roller 41 of the second embodiment has a rotation center axis 41a in a direction substantially orthogonal to the rotation center axes 61a of the first balls 61.

Furthermore, each second roller 41 is configured to roll in contact with the lower open end portion 64b of the substantial turned U-shape of the track rail 11. In this way, in the second embodiment, each second roller 41 is configured to roll in contact with the lower open end portion 64b of the substantial turned U-shape of the track rail 11, and thus, even if a roll moment Mc is applied to the moving slider 21, the second rollers 41 can properly receive the moment Mc. In other words, the second embodiment enables enhancement in rigidity against a roll moment Mc, and thus enables provision of the rolling guide device 60 capable of performing a proper and stable guiding operation even if unbalanced weight is applied to the moving slider 21.

Also, in the second embodiment, as illustrated in Fig. 8, the second rollers 41 are disposed in such a manner as to not project from an outer periphery of the moving slider 21, and thus, the rolling guide device 60 according to the second embodiment has a very compact configuration as a whole. Such configuration produces an effect of minimization of installation space, and thus, the rolling guide device 60 according to the second embodiment has an advantage of a large scope of applicability.

Although preferable embodiments of the present invention have been described above, the technical scope of the present invention is not limited to the scope of the description in the embodiments. Various changes or modifications of the embodiments are possible.

For example, the above first embodiment has been described taking a case where the first wheels 31, which serve as first rolling elements, and the second rollers 41, which each serve as a second rolling element, are configured as wheels or rollers as an example. However, for a first rolling element and a second rolling element of the present invention, a cam follower or a roller follower can be employed instead of the wheel or the roller above.

Also, for example, the above second embodiment has been described taking a case where the first rolling elements are the first balls 61 and the second rolling elements are the second rollers 41 as an example. However, for a first rolling element and a second rolling element of the present invention, any of a wheel, a roller, a cam follower or a roller follower can be employed or a configuration resulting from arbitrary combination of a wheel, a roller, a cam follower or a roller follower can be employed.

Also, although the above first embodiment has been described taking cases where the rolling guide device 10 is used for the opening and closing mechanism 100 for a hanging door to be used in a house or the opening and closing mechanism 200 for a door body to be used in a railway car as examples, the rolling guide device 60 according to the second embodiment can also be used for the opening and closing mechanisms 100, 200.

Also, for example, in each of the first and second embodiments above, each second roller 41 is configured to roll in contact with the lower open end portion 14b, 64b of the substantial C-shape or the substantial turned U-shape of the track rail 11. However, each second roller 41, which is a second rolling element of the present invention, may be configured to be in contact with an upper open end portion of the substantial C-shape or the substantial turned U-shape of the track rail 11.

Also, for example, the above first and second embodiments have been described taking a case where a second rolling element of the present invention is a roller (second roller 41) as an example; however, a second rolling element of the present invention may be a ball. Then, a ball employed as a second rolling element of the present invention may be one ball, a series of balls or a plurality of circulating balls.

The invention is defined by the appended claims.

### REFERENCE NUMERALS

10 rolling guide device (according to first embodiment and alteration thereof), 11 track rail (track member), 12 mounting surface portion, 12a mounting hole, 13 upper wall portion (wall portion), 13a first wheel upper rolling surface (rolling element rolling surface), 14 lower wall portion (wall portion), 14a first wheel lower rolling surface (rolling element rolling surface), 14b lower open end portion (outer end portion), 15 inner space (inside space), 21 moving slider (moving member), 31 first wheel (first rolling element), 31a rotation center line, 41 second roller (second rolling element), 41a rotation center line, 51 slide door frame (door frame), 52 hanging door (door body), 53 door body, 55 door frame, 60 rolling guide device (according to second embodiment), 61 first ball (first rolling element), 61a rotation center line, 63 upper wall portion (wall portion), 63a first ball upper rolling surface (rolling element rolling surface), 64 lower wall portion (wall portion), 64a first ball lower rolling surface (rolling element rolling surface), 64b lower open end portion (outer end portion), 65 slider block, 65a, 65b ball rolling groove, 66 mounting block, 67 retainer, P₁, P₂ contact point, L₁, L₂ line (indicating roll direction), 100, 200 opening and closing mechanism.

## Claims

1. A rolling guide device (10) comprising:
a track member (11) that is a long member extending in a longitudinal direction, the track member (11) including a mounting surface portion (12) that serves as a base for mounting to an external member and a pair of wall portions (13, 14) provided in such a manner as to stand from respective opposite end portions of the mounting surface portion (12) toward one side;
a moving member (21) installed in such a manner as to be capable of reciprocating movement along the longitudinal direction of the track member (11); and
a plurality of first rolling elements (31) rollably disposed inside a space (15) between the track member (11) and the moving member (21), the space (15) being surrounded by the mounting surface portion (12) and the pair of wall portions (13, 14) included in the track member (11), to guide reciprocating movement of the moving member (21) relative to the track member (11), wherein
a rolling element rolling surface (13a, 14a) that is in contact with a rolling element outer circumferential surface of a first rolling element from among the first rolling elements (31) is formed at each of respective wall surfaces of the pair of wall portions (13, 14), the wall surfaces facing each other,
the rolling element rolling surfaces (13a, 14a) formed at the pair of wall portions (13, 14), respectively, are each formed as a circular arc groove including a single circular arc, to allow each of the first rolling elements (31) and the corresponding one of the rolling element rolling surfaces to be in contact with each other at one point, and
the moving member (21) includes a second rolling element (41) that rolls in contact with an outer end portion of one wall portion of the pair of wall portions (13, 14) included in the track member (11).

2. The rolling guide device (10) according to claim 1, wherein a radius of curvature of each of the rolling element rolling surfaces (13a, 14a) is slightly larger than a radius of curvature of each rolling element from among the first rolling elements (31).

3. The rolling guide device (10) according to claim 1 or 2, wherein the outer end portion of the one wall portion of the pair of wall portions (13, 14) of the track member (11), the outer end portion being in contact with the second rolling element (41), includes a ground surface subjected to a grinding process.

4. The rolling guide device (10) according to claim 1 to 3, wherein the second rolling element (41) is installed at the moving member (21) via an eccentric shaft.

5. An opening and closing mechanism (100, 200) comprising the rolling guide device (10) according to any one of claims 1 to 4, a door frame (51) to which the track member (11) of the rolling guide device (10) being installed, and a door body (53) being installed on the moving member (21), to allow the opening and closing mechanism to perform an operation of opening and closing the door body (53) relative to the door frame (55).

## Patentansprüche

1. Eine Rollführungsvorrichtung (10), die Folgendes umfasst:
ein Schienenelement (11), bei dem es sich um ein langes Element handelt, das sich in einer Längsrichtung erstreckt, wobei das Schienenelement (11) einen Montageflächenabschnitt (12), der als Basis für die Montage an einem externen Element dient, und ein Paar von Wandabschnitten (13, 14) aufweist, die so vorgesehen sind, dass sie von den jeweiligen gegenüberliegenden Endabschnitten des Montageflächenabschnitts (12) zu einer Seite hin abstehen;
ein bewegliches Element (21), das so angebracht ist, dass es eine Hin- und Herbewegung entlang der Längsrichtung des Schienenelements (11) ausführen kann; und
eine Vielzahl von ersten Rollelementen (31), die rollbar innerhalb eines Raums (15) zwischen dem Schienenelement (11) und dem beweglichen Element (21) angeordnet sind, wobei der Raum (15) von dem Montageflächenabschnitt (12) und dem Paar von Wandabschnitten (13, 14), die in dem Schienenelement (11) enthalten sind, umgeben ist, um die Hin- und Herbewegung des beweglichen Elements (21) relativ zu dem Schienenelement (11) zu führen, wobei
eine Rollelement-Rollfläche (13a, 14a), die in Kontakt mit einer Rollelement-Außenumfangsfläche eines ersten Rollelements von den ersten Rollelementen (31) steht, an jeder der jeweiligen Wandflächen des Paars von Wandabschnitten (13, 14) ausgebildet ist, wobei die Wandflächen einander zugewandt sind,
die Rollelement-Rollflächen (13a, 14a), die jeweils an dem Paar von Wandabschnitten (13, 14) ausgebildet sind, jeweils als eine Kreisbogennut ausgebildet sind, die einen einzelnen Kreisbogen enthält, um zu ermöglichen, dass jedes der ersten Rollelemente (31) und die entsprechende der Rollelement-Rollflächen an einem Punkt miteinander in Kontakt sind, und
das bewegliche Element (21) ein zweites Rollelement (41) enthält, das in Kontakt mit einem äußeren Endabschnitt eines Wandabschnitts des Paars von Wandabschnitten (13, 14), die in dem Schienenelement (11) enthalten sind, rollt.

2. Rollführungsvorrichtung (10) nach Anspruch 1, wobei der Krümmungsradius jeder der Rollelement-Rollflächen (13a, 14a) etwas größer ist als der Krümmungsradius jedes Rollelementes unter den ersten Rollelementen (31).

3. Rollführungsvorrichtung (10) nach Anspruch 1 oder 2, wobei der äußere Endabschnitt des einen Wandabschnitts des Paars von Wandabschnitten (13, 14) des Schienenelements (11), der äußere Endabschnitt der in Kontakt mit dem zweiten Rollelement (41) steht, eine geschliffene Oberfläche aufweist, die einem Schleifprozess unterzogen wurde.

4. Rollführungsvorrichtung (10) nach einem der Ansprüche 1 bis 3, wobei das zweite Rollelement (41) über eine Exzenterwelle an dem beweglichen Element (21) angebracht ist.

5. Öffnungs- und Schließmechanismus (100, 200), umfassend die Rollführungsvorrichtung (10) nach einem der Ansprüche 1 bis 4, einen Türrahmen (51), an dem das Schienenelement (11) der Rollführungsvorrichtung (10) installiert ist, und einen Türkörper (53), der an dem beweglichen Element (21) installiert ist, um es dem Öffnungs- und Schließmechanismus zu ermöglichen, einen Vorgang des Öffnens und Schließens des Türkörpers (53) relativ zu dem Türrahmen (55) durchzuführen.

## Revendications

1. Dispositif de guidage à roulements (10) comprenant :
un élément de piste (11) qui est un élément long s'étendant dans une direction longitudinale, l'élément de piste (11) incluant un élément de surface de montage (12) qui sert de base pour le montage d'un élément externe, ainsi qu'une paire d'éléments de paroi (13, 14) disposée de manière à reposer depuis l'extrémité opposée respective de l'élément de surface de montage (12) en direction d'un côté,
un élément mobile (21) installé de manière à pouvoir effectuer un mouvement de va-et-vient le long de la direction longitudinale de l'élément de piste (11), et
une pluralité d'éléments roulants (31) disposés pour pouvoir rouler à l'intérieur d'un espace (15) ménagé entre l'élément de piste (11) et l'élément mobile (21), l'espace (15) étant entouré par l'élément de surface de montage (12) et la paire d'éléments de paroi (13, 14) inclus dans l'élément de piste (11), afin de guider le mouvement de va-et-vient de l'élément mobile (21) par rapport à l'élément de piste (11), où
une surface de roulement d'élément roulant (13a, 14a), qui est en contact avec la surface circonférentielle externe d'élément roulant d'un premier élément roulant parmi les premiers éléments roulants (31), est formée au niveau de chaque surface de paroi respective de la paire d'éléments de paroi (13, 14), les surfaces de parois se faisant face,
les surfaces de roulement d'éléments roulants (13a, 14a), formées respectivement au niveau de la paire d'éléments de paroi (13, 14), sont chacune façonnée comme une rainure en arc circulaire incluant un arc circulaire unique, afin de permettre à chacun des premiers éléments roulants (31) et à l'une correspondante des surfaces de roulement d'éléments roulants d'entrer en contact au niveau d'un point, et
l'élément mobile (21) inclut un second élément roulant (41) qui roule en contact avec une extrémité externe d'un élément de paroi de la paire d'éléments de paroi (13, 14) inclus dans l'élément de piste (11).

2. Dispositif de guidage à roulements (10) selon la revendication 1, dans lequel le rayon de courbure de chacune des surfaces de roulement d'éléments roulants (13a, 14a) est légèrement plus grand que le rayon de courbure de chaque élément roulant parmi les premiers éléments roulants.

3. Dispositif de guidage à roulements (10) selon la revendication 1 ou la revendication 2, dans lequel l'extrémité externe du premier élément de paroi de la paire d'éléments de paroi (13, 14) de l'élément de piste (11), l'extrémité externe étant en contact avec le second élément roulant (41), inclut une surface meulée soumise à un processus de rectification.

4. Dispositif de guidage à roulements (10) selon l'une des revendications 1 à 3, dans lequel le second élément roulant (41) est installé au niveau de l'élément mobile (21) par l'intermédiaire d'un arbre excentré.

5. Mécanisme d'ouverture et fermeture (100, 200) comprenant le dispositif de guidage à roulements (10) conforme à l'une quelconque des revendications 1 à 4, un châssis de porte (51) sur lequel l'élément de piste (11) du dispositif de guidage à roulements (10) est installé, ainsi qu'un corps de porte (53) installé sur l'élément mobile (21), destiné à permettre au mécanisme d'ouverture et de fermeture d'effectuer une opération d'ouverture et de fermeture du corps de porte (53) par rapport au châssis de porte (55).
